# EUROPEAN PATENT SPECIFICATION

(11) **EP 0 385 738 B1**
(45) Date of publication and mention of the grant of the patent: **04.05.1994**
(21) Application number: 90302099.8
(22) Date of filing: 28.02.1990
(51) Int. Cl.: C09D 11/00, B41J 2/01

(54) **Ink composite**
Zusammengesetzte Tinte
Encre composite

(30) Priority: 02.03.1989 JP 50884/89
(43) Date of publication of application: 05.09.1990
(73) Proprietor: SEIKO EPSON CORPORATION, Shinjuku-ku Tokyo (JP)
(72) Inventor: Shinozuka, Shoichi, Suwa-shi, Nagano-ken (JP); Uehara, Masamitsu, Suwa-shi, Nagano-ken (JP); Matsuzaki, Makoto, Suwa-shi, Nagano-ken (JP); Kanbayashi, Kenichi, Suwa-shi, Nagano-ken (JP)
(74) Representative: Sturt, Clifford Mark

(56) References cited:
- EP-A- 0 099 682
- US-A- 4 659 383
- DATABASE WPIL, accession no. 88-288775 [41], Derwent Publications Ltd, London, GB; & JP-A-63 210 176

## Description

The present invention relates to an ink composite for use in ink jet recording equipment, and in particular for use in ink jet recording equipment which ejects the ink composite at temperatures higher than room temperature.

Ink jet recording has the advantages of quietness and high speed for printing. In the past, the ink composite used for the ink jet recording was a water-based liquid. But, since the recording was carried out by the ink composite soaking into paper, blots were generated when using paper which was easily soaked with ink. Accordingly, the problem occurred that the printing quality was lowered because the peripheries of recorded dots were not clear cut.

In order to overcome this problem and obtain good printing quality without regard to paper quality, a method of ink jet recording was developed in which a solid state ink formed from a hot-melt type ink composite, which is based on wax etc. and which is solid at room temperature, is expelled after heating and melting at high temperature and forms the recording dots by cooling and solidifying on recording paper. Such a method is disclosed in U.S. Patents Nos. 4,390,369, 4,484,948 and 4,659,383 and in Japanese Published Patent Application No. 108271/1983. However, the solid state wax etc. used in this method as the carrier hardly dissolves metallic complex type solvent dyes, especially metallic complex type solvent dyes with good heat resistance. Accordingly, a solvent dye, such as C.I. SOLVENT BLACK 3, 7, is used which exhibits good solubility in relatively polar waxes and which exhibits weak heat resistance.

In the above hot melt type ink composite, the heat resistance of the wax used as a carrier may be improved by adding anti-oxidants. But, the solvent dye used as a colour material has the property that the dye decomposes when left for a long time in an environment heated to a high temperature, because of its weak heat resistance, and its colour changes to brown as a result of the decomposition.

The present invention seeks to overcome the above problem, and to provide a highly reliable ink composite in which discolouration due to exposure to high temperatures for long periods is substantially avoided.

According to the present invention, a metallic complex type solvent dye having a good heat resistance may be dissolved into a carrier such as wax.

In accordance with the present invention, there is provided an ink composite comprising a carrier and a colour material, characterised in that the carrier includes at least a form of higher alkyl amine, higher fatty acid, and carnauba wax, and in that the colour material includes at least a metallic complex type solvent dye.

The carrier may be a solid or a semi-solid having a melting point or pour point higher than room temperature.

Preferably, the content of the higher alkyl amine is from 0.1% to 10% by weight, the content of the higher fatty acid is from 0.1% to 30% by weight, the content of the carnauba wax is from 1% to 30% by weight, and the content of the metallic complex type solvent dye is from 0.1% to 10% by weight.

The metallic complex type solvent dye employed in the present invention generally shows good solubility to polar solvents such as lower aliphatic alcohol, but shows poor solubility with waxes having small polarity. Nevertheless, it has been found that the metallic complex type solvent dye will dissolve into a mixture of the form of higher alkyl amine and higher fatty acid, and moreover the resulting product will dissolve again into carnauba wax, and may thus exhibit solubility in a carrier without polarity.

The present invention is explained further with reference to the examples given below:

As a method of preparing an ink composite according to the invention, a metallic complex type solvent dye is mixed with a mixture of a form of higher alkyl amine and higher fatty acid, then stirred while heated to a temperature above 80°C. After that, carnauba wax is mixed with the above mixture, then stirred while heated to a temperature above 80°C, and other carrier ingredients are added. Uniformly dissolved components are obtained after stirring at the temperature above 80°C. If necessary, they can be filtered under conditions of fusing at high temperature.

As a physical property of the ink, the viscosity, when the operating temperature is set from 100°C to 200°C, must be less than 15.0 mPa.s for droplet forming and flying stability, and is preferably from 7.0 to 2.0 mPa.s in order to realise a high speed response (2 to 3 kHz or more).

The ingredients of an ink composite according to the invention are as follows:

### Forms of higher alkyl amines

Stearyl amine, distearyl amine, tristearyl amine, cetyl amine, dicetyl amine, tricetyl amine, N-ethylcetyl amine, myristyl amine or dimyristyl amine.

### Fatty acids

Lauric acid, palmitic acid, stearic acid, behenic acid or brassidic acid.

### Carnauba wax

Carnauba Wax No. 1 Noda Wax Co.

### Metallic complex type solvent dyes

Aizen Spilon Black BH
Aizen Spilon Black GSH special
Aizen Spilon Black BLH special Hodogaya Chemical Co.Ltd
Vali Fast Black 3804 Orient Kagaku Co. Ltd.

### Other carrier materials

Paraffins
n-paraffin and isoparaffin, the carbon numbers of which are from 23 to 32.
Paraffin waxes
No. 115, 120, 125, 130, 135, 140, 150, 155
HNP-3, 9, 10, 11
SP-0145, 1035, 3040, 3035, 0110 Nippon Seiroh Co. Ltd.
Micro-crystalline wax
Hi-Mic-2095, 1080, 1045 Nippon Seiroh Co. Ltd.
Synthesised waxes

Stearon, decanediol, monostearine, dodecanediol.

Other additives such as anti-oxidants may also be added.

Specific examples of the ink composite obtained from the above ingredients are given below:

### EXAMPLE 1

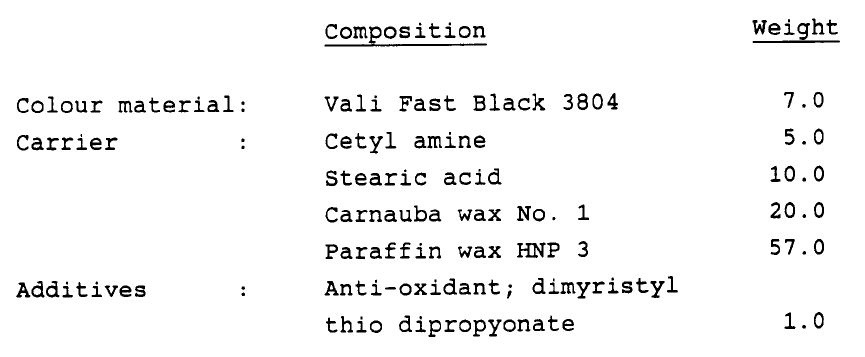

The Vali Fast Black 3804 was mixed with the mixture of cetyl amine and stearic acid, and stirred with heating at 100°C, then the carnauba wax no. 1 was mixed in, and stirred with heating at 100°C. The paraffin wax HNP 3 and anti-oxidant were added, and stirred with heating at 100°C, then filtered with pressurisation by means of a membrane filter made of teflon (Registered Trade Mark), the pore size of which was 5 µm. An ink composite was thus obtained, the viscosity of which was 5.5 mPa.s at 120°C.

Known ink-on-demand type ink jet equipment, for use with heated and melted ink, was filled with the above ink composite. By carrying out bit-image printing and letter printing on general high quality papers, bond papers and PPC papers, it was established that good printing quality was obtained with such an ink composite. Moreover, evaluation of the effects of heating tests I and II described below in relation to lowering of ink concentration was carried out.

### Test I:

The ink was poured into a Pyrex (Registered Trade Mark) glass vessel, and was held at 180°C for 1,000 hours, then printing was carried out on PPC papers. The lowering of ink concentration was classified as follows:

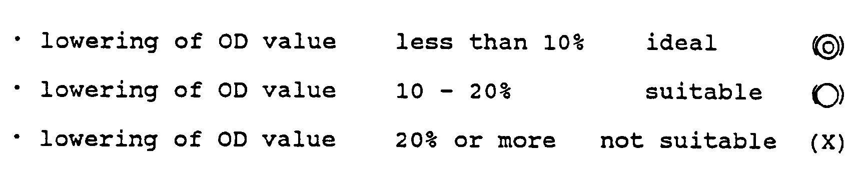

The lowering of OD value in this instance was less than 10% because the OD value before testing was 1.35 and the OD value after testing was 1.25, so the result was ideal.

### Test II:

The ink was poured into the Pyrex glass vessel, and twenty cycles were completed, each involving maintaining the vessel at a temperature of 200°C for 24 hours and then at room temperature for 24 hours, then the above ink was printed on PPC papers. The lowering of ink concentration was classified as follows:

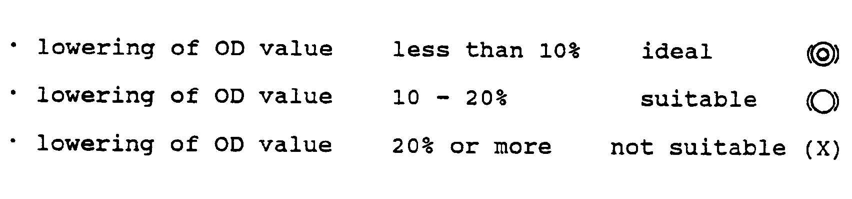

The lowering of OD value was less than 10% because the OD value before testing was 1.35 and the OD value after testing was 1.22, so the result was again ideal.

### EXAMPLES 2 TO 9

Then, further examples of the ink composite, the ingredients of which are shown in Table 1 as Examples 2 to 9, were obtained employing the same method as in Example 1. These Examples employ various combinations of the ingredients above. In each case, the content of the form of higher alkyl amine was selected to fall within the range from 0.1% to 10% by weight, the content of the fatty acid was selected to fall within the range from 0.1% to 30% by weight, the content of the carnauba wax was selected to fall within the range from 1% to 30% by weight, and the content of the metallic complex type solvent dye was selected to fall within the range from 0.1% to 10% by weight.

Heat tests I and II were also carried out in relation to Examples 2 to 9 by the same method as in Example 1, and the results were evaluated in the same way and are shown in Table 2.

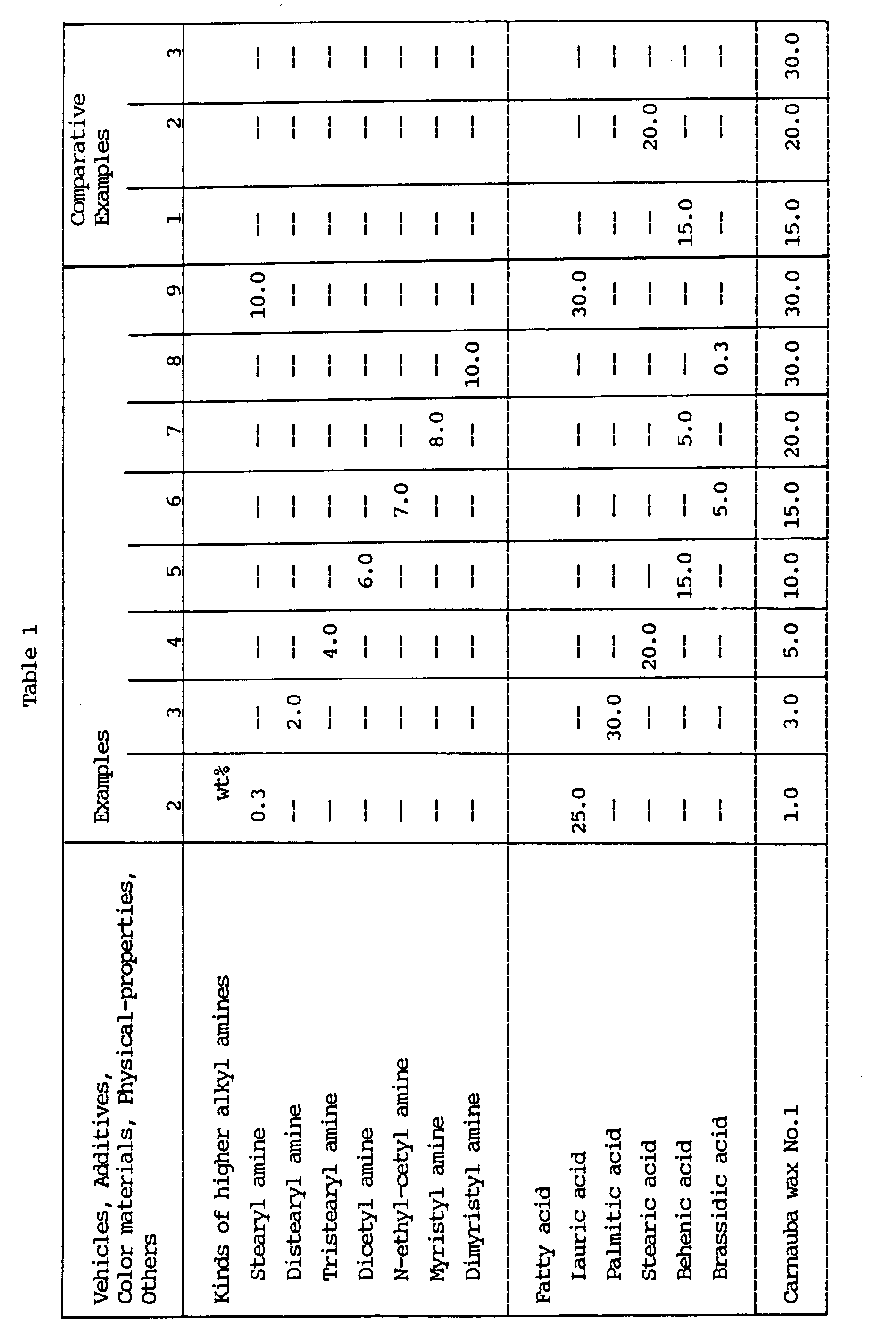

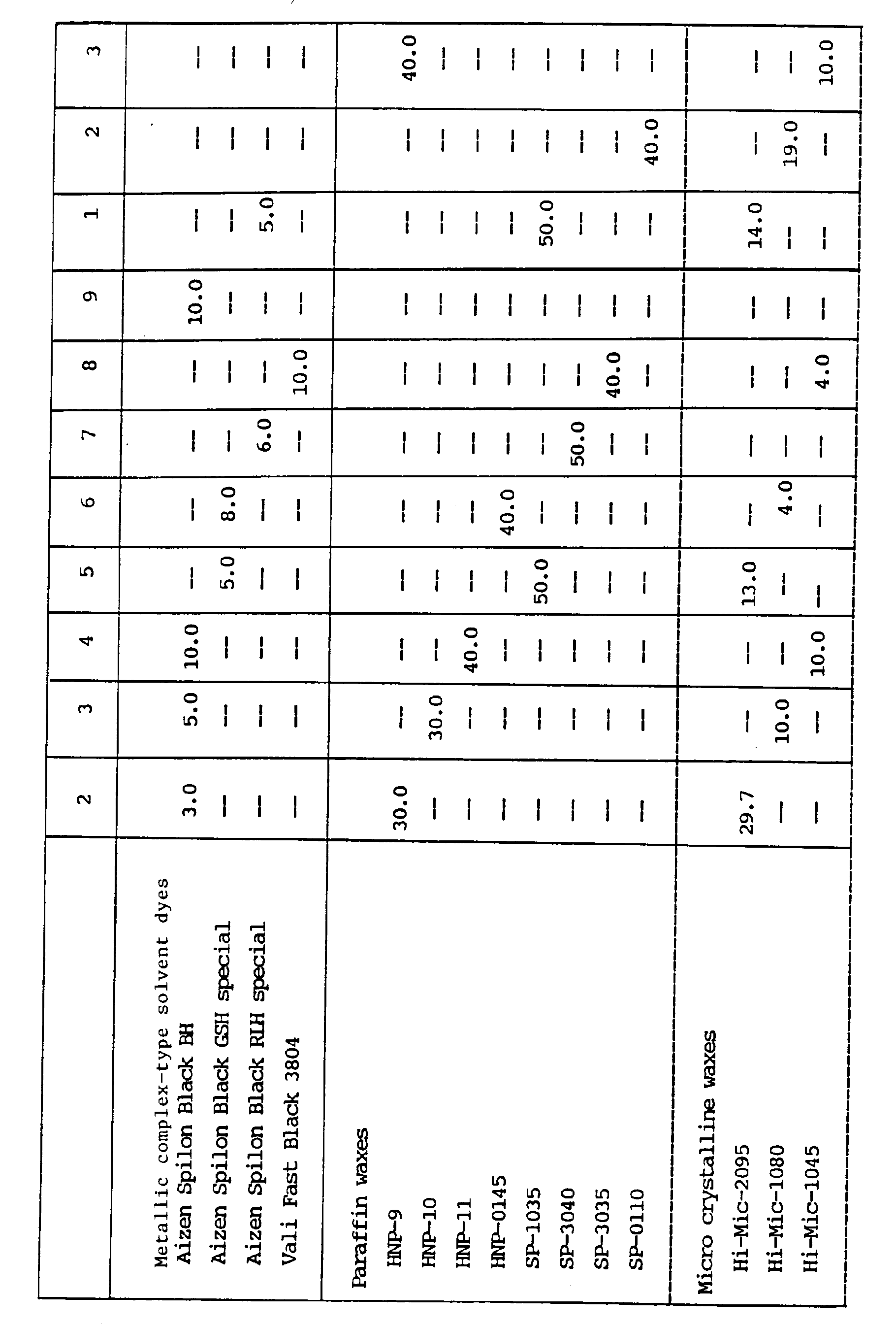

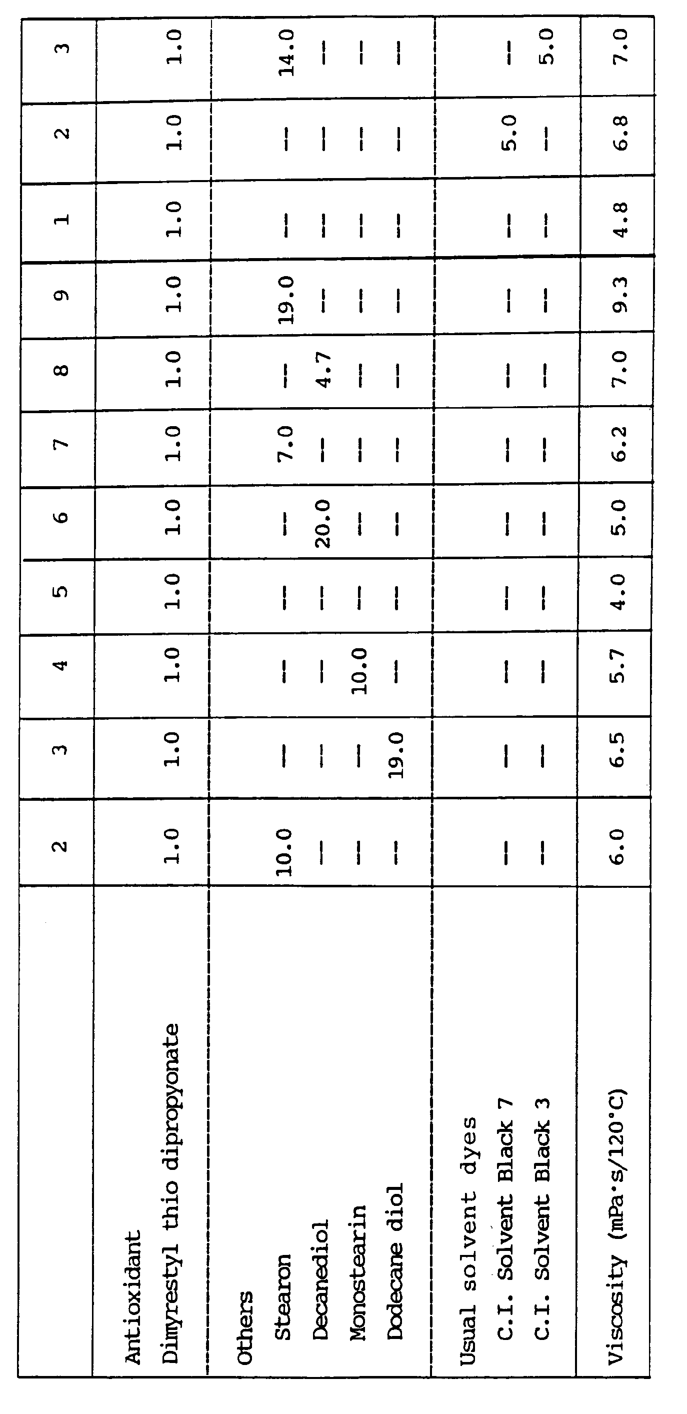

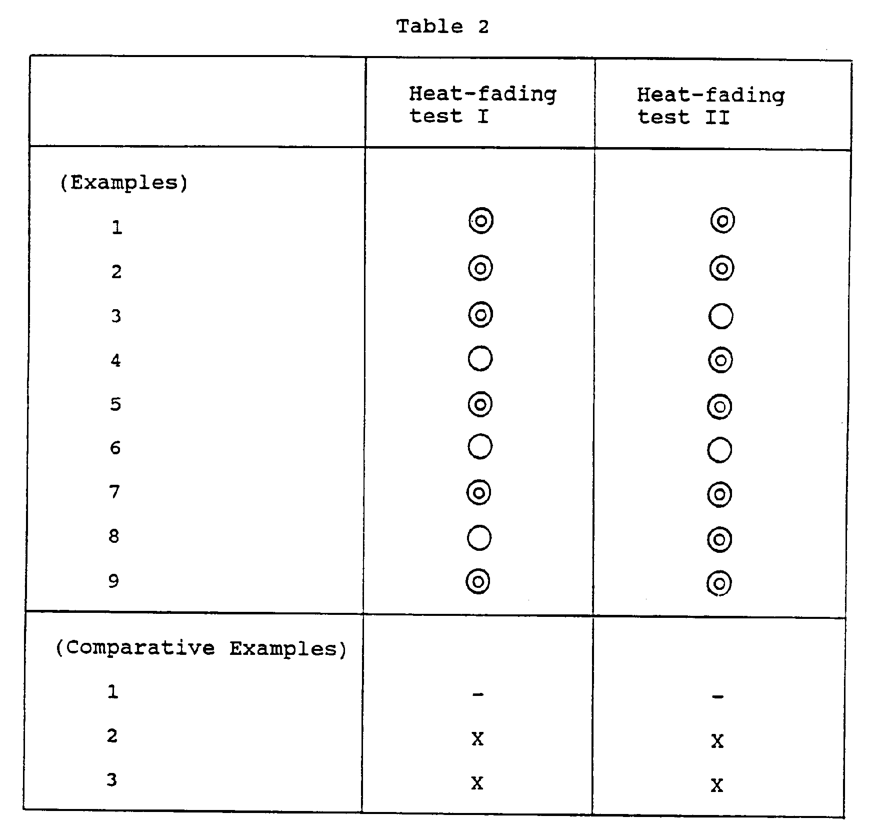

### Comparative Examples

Further ink composites employing various combinations of the above ingredients but without any higher alkyl amine at least were prepared by the same method as in Example 1, and are shown in Table 1 as Comparative Examples 1 to 3.

Evaluation of these Comparative Examples using heat tests I and II was carried out by the same method as in Example 1. The results are shown in Table 2 and are also discussed below:

### Comparative Example 1

The metallic complex type solvent dye showed bad solubility, and printing ink concentration after preparing and filtering was 0.3 expressed in OD value.

### Comparative Example 2

Lowering of printing concentration was 40% in both tests, so the composite was not suitable.

### Comparative Example 3

The solvent dye showed bad heat resistance, and the colour of the ink composite became brown in both heat tests.

As shown above, in an ink composite comprising a carrier and a colour material to be expelled from ink jet recording equipment under conditions of temperature higher than normal temperature, metallic complex type solvent dye having the best heat resistance property can be used as the colour material with the combination of a form of higher alkyl amine, higher fatty acid and carnauba wax as the carrier. The present invention offers the advantage that fading of the ink composite at high temperature can be significantly reduced by comparison with the prior art.

## Claims

1. An ink composite comprising and a carrier and a colour material, characterised in that the carrier includes at least a form of higher alkyl amine chosen from stearyl amine, distearyl amine, tristearyl amine, cetyl amine, dicetyl amine, tricetyl amine, N-ethylcetyl amine, myristyl amine and dimyristyl amine, higher fatty acid chosen from lauric acid, palmitic acid, stearic acid, behenic acid and brassidic acid, and carnauba wax, and in that the colour material includes at least a metallic complex type solvent dye.

2. An ink composite according to claim 1 characterised in that the carrier is a solid or semi-solid having a melting point or pour point higher than room temperature.

3. An ink composite according to claim 1 or 2 characterised in that the content of the form of higher alkyl amine is from 0.1% to 10% by weight.

4. An ink composite according to any of claims 1 to 3 characterised in that the content of the fatty acid is from 0.1% to 30% by weight.

5. An ink composite according to any preceding claim characterised in that the content of the carnauba wax is from 1% to 30% by weight.

6. An ink composite according to any preceding claim characterised in that the content of the metallic complex type solvent dye is from 0.1% to 10% by weight.

7. Ink jet recording equipment of the type which ejects an ink composite at a temperature higher than room temperature, in combination with an ink composite according to any preceding claim.

## Patentansprüche

1. Verbundtinte, umfassend einen Träger und ein Färbematerial,
**dadurch gekennzeichnet,**
daß der Träger mindestens eine Art von höherem Alkylamin, ausgewählt aus Stearylamin, Distearylamin, Tristearylamin, Cetylamin, Dicetylamin, Tricetylamin, N-Ethylcetylamin, Myristylamin und Dimyristylamin, eine höhere Fettsäure, ausgewählt aus Laurinsäure, Palmitinsäure, Stearinsäure, Behensäure und Brassidinsäure, und Carnauba-Wachs enthält und daß das Färbematerial mindestens einen Lösungsmittelfarbstoff des Metallkomplextyps enthält.

2. Verbundtinte nach Anspruch 1,
**dadurch gekennzeichnet,**
daß der Träger eine Festsubstanz oder eine halbfeste Substanz mit einem Schmelzpunkt oder Fließpunkt höher als Raumtemperatur ist.

3. Verbundtinte nach Anspruch 1 oder 2,
**dadurch gekennzeichnet,**
daß der Gehalt der Art von höherem Alkylamin von 0,1 % bis 10 % auf Gewichtsbasis ist.

4. Verbundtinte nach einem der Ansprüche 1 bis 3,
**dadurch gekennzeichnet,**
daß der Gehalt der Fettsäure von 0,1 % bis 30 % auf Gewichtsbasis ist.

5. Verbundtinte nach einem der vorhergehenden Ansprüche,
**dadurch gekennzeichnet,**
daß der Gehalt des Carnauba-Wachses von 1 % bis 30 % auf Gewichtsbasis ist.

6. Verbundtinte nach einem der vorhergehenden Ansprüche,
**dadurch gekennzeichnet,**
daß der Gehalt des Lösungsmittelfarbstoffs des Metallkomplextyps von 0,1 % bis 10 % auf Gewichtsbasis ist.

7. Tintenstrahl-Aufzeichnungsgerät des Typs, der eine Verbundtinte bei einer Temperatur ausstößt, die höher als Raumtemperatur ist, in Kombination mit einer Verbundtinte nach einem der vorhergehenden Ansprüche.

## Revendications

1. Encre composite comprenant un support et un matériau colorant, caractérisée en ce que le support comprend au moins une forme d'une alkylamine supérieure choisie parmi la stéarylamine, la distéarylamine, la tristéarylamine, la cétylamine, la dicétylamine, la tricétylamine, la n-éthylcétylamine, la myristylamine, la dimyristylamine, les acides gras supérieurs choisis parmi l'acide laurique, l'acide palmitique, l'acide stéarique, l'acide béhénique et l'acide brassidique, et de la cire de carnauba, et en ce que le matériau colorant comprend au moins un colorant au solvant du type complexe metallifère.

2. Encre composite selon la revendication 1, caractérisée en ce que le support est un solide ou un semi-solide ayant un point d'écoulement ou un point de fusion supérieur à la température ambiante.

3. Encre composite selon la revendication 1 ou 2, caractérisée en ce que sa teneur en la forme d'alkylamine supérieure est de 0,1 % à 10 % en poids.

4. Encre composite selon l'une quelconque des revendications 1 à 3, caractérisée en ce que sa teneur en acide gras est de 0,1 % à 30 % en poids.

5. Encre composite selon l'une quelconque des revendications précédentes, caractérisée en ce que sa teneur en cire de carnauba est de 1 % à 30 % en poids.

6. Encre composite selon l'une quelconque des revendications précédentes, caractérisée en ce que sa teneur en le colorant au solvant du type complexe métallifère est de 0,1 % à 10 % en poids.

7. Equipement d'enregistrement à jet d'encre, du type qui éjecte une encre composite à une température supérieure à la température ambiante, en combinaison avec une encre composite selon l'une quelconque des revendications précédentes.
